# EUROPEAN PATENT APPLICATION

(11) **EP 3 477 592 A1**
(43) Date of publication of application: **01.05.2019**
(21) Application number: 17198813.2
(22) Date of filing: 27.10.2017
(51) Int. Cl.: G06T 7/11

(54) **DETERMINING OVER-SEGMENTATION IN AN IMAGE OF A BRANCHING ANATOMICAL STRUCTURE**

(71) Applicant: Koninklijke Philips N.V., 5656 AE Eindhoven (NL)
(72) Inventor: FU, Catherine L, 5656 AE Eindhoven (NL)
(74) Representative: de Haan, Poul Erik

(57) **Abstract**

There is provided a system (100) for determining over-segmentation in a segmented image of a branching anatomical structure. The segmented image of the branching anatomical structure comprises a plurality of segments. The system comprises a memory (106) comprising instruction data representing a set of instructions and a processor (102) configured to communicate with the memory and to execute the set of instructions. The set of instructions, when executed by the processor, cause the processor to determine at least one geometric property of a segment of the segmented image, determine whether the at least one geometric property of the segment is consistent with a shape of a branch in a branching anatomical structure, and determine whether the segment is an over-segmentation based on whether the at least one geometric property of the segment is determined to be consistent with the shape of a branch in a branching anatomical structure.

## Description

### TECHNICAL FIELD OF THE INVENTION

This disclosure relates to the field of image processing and, in particular, to a method and system for determining over-segmentation in a segmented image of a branching anatomical structure.

### BACKGROUND TO THE INVENTION

Segmentation is often used in image processing to divide (or segment) an image into segments. Each segment corresponds to a region in the image and this can help with image analysis. Segmentation is often used in medical imaging whereby computer-implemented methods may be used to automatically (or semi-automatically) extract and analyse anatomical features in medical images.

The performance of segmentation algorithms can be affected by factors such as poor image quality, missing data (known as the "partial volume effect") or image artefacts. Such factors may lead to an effect known as over-segmentation whereby the algorithm creates a segment that does not correspond to a real feature in the image. As such, over-segmentation represents "false-positive" segments whereby the segmentation process suggests that a feature exists in the image, when actually there is nothing there, or the segment actually forms an integral part of a larger structure in the image.

Over-segmentation can detrimentally affect automated image processing of medical images (such as classification and/or diagnosis processes) by, for example, suggesting the presence of anatomical structures or anomalies that are not actually there.

In traditional methods, over-segmentation is removed manually by allowing the user to cut out over-segmented segments. Such methods have the disadvantage of being time consuming and tedious for users. They may also have accuracy issues if the user is unable to fully cut out an over-segmented segment.

There is thus a need for methods and systems that overcome these problems.

### SUMMARY OF THE INVENTION

As noted above, there are various challenges associated with determining (e.g. locating) over-segmentation in a segmented image of a branching anatomical structure.

Therefore according to a first aspect, there is provided a system configured for determining over-segmentation in a segmented image of a branching anatomical structure, wherein the segmented image of the branching anatomical structure comprises a plurality of segments. The system comprises a memory comprising instruction data representing a set of instructions and a processor configured to communicate with the memory and to execute the set of instructions. The set of instructions, when executed by the processor, cause the processor to determine at least one geometric property of a segment of the segmented image of the branching anatomical structure, determine whether the at least one geometric property of the segment is consistent with a shape of a branch in a branching anatomical structure, and determine whether the segment is an over-segmentation based on whether the at least one geometric property of the segment is determined to be consistent with the shape of a branch in a branching anatomical structure.

By determining whether the shape of the segment is consistent with the shape of a branch of an anatomical structure, over-segmented segments with shapes that are inconsistent with branches can easily be identified and removed. By removing over-segmentation, the segmentation is made more accurate. This makes subsequent processing using the segmented image, such as, for example, automated diagnosis of medical images more accurate.

In some embodiments, causing the processor to determine at least one geometric property of the segment may comprise causing the processor to determine a first geometric property of the segment in a first portion of the segment; and determine a second geometric property of the segment in a second portion of the segment; wherein the first portion lies closer to a trunk of the branching anatomical structure than the second portion.

In some embodiments, causing the processor to determine whether the at least one geometric property of the segment is consistent with a shape of a branch in the branching anatomical structure may comprise causing the processor to: compare the first and second geometric properties of the segment.

In some embodiments, the set of instructions, when executed by the processor may cause the processor to determine that the segment is an over-segmentation if the second geometric property of the segment is larger than the first geometric property of the segment.

In some embodiments, the set of instructions, when executed by the processor may cause the processor to determine that the segment corresponds to a branch of the branching anatomical structure in the image if the second geometric property of the segment is smaller than the first geometric property of the segment.

In some embodiments, the set of instructions, when executed by the processor, may further cause the processor to apply a thinning operation to the segment to produce a thinned segment and determine the location of an end of the segment by determining an image component in the thinned segment that has only one neighbour in the thinned segment.

In some embodiments, the set of instructions, when executed by the processor, may further cause the processor to determine a root point of the thinned segment, the root point of the segment corresponding to a part of the segment that lies closest to the trunk of the branching anatomical structure.

In some embodiments, the set of instructions, when executed by the processor, may further cause the processor to determine the location of the segment in the segmented image by determining the points in the thinned segment that lie between the determined root point and the determined end of the segment.

In some embodiments, the set of instructions, when executed by the processor, may further cause the processor to: determine a length of the segment; determine whether the segment is overlapped by another segment of the segmented image of the branching anatomical structure; and determine the segment is a burr of the segmentation if the segment is not overlapped and the length is lower than a threshold.

In some embodiments, the at least one geometric property may comprise a radius of the segment, a diameter of the segment, a circumference of the segment, a cross-sectional area of the segment, or a volume of the segment.

In some embodiments, the branching anatomical structure may comprise one of: a vascular structure wherein a branch in the vascular structure comprises a vessel; and a bronchial tree wherein a branch in the bronchial tree comprises a bronchus.

In some embodiments, the set of instructions, when executed by the processor, may further cause the processor to: receive a user input, the user input providing a confirmation of whether the segment is an over-segmentation; and remove the segment from the segmented image if the user input confirms the segment is an over-segmentation.

In some embodiments, the set of instructions, when executed by the processor, may cause the processor to repeatedly: determine at least one geometric property of a segment of the segmented image of the branching anatomical structure; determine whether the at least one geometric property of the segment is consistent with a shape of a branch in a branching anatomical structure; and determine whether the segment is an over-segmentation based on whether the at least one geometric property of the segment is determined to be consistent with the shape of a branch in a branching anatomical structure; for a plurality of segments in the segmented image of the branching anatomical structure.

According to a second aspect, there is provided a computer-implemented method of determining over-segmentation in a segmented image of a branching anatomical structure, wherein the segmented image of the branching anatomical structure comprises a plurality of segments. The method comprises: determining at least one geometric property of a segment of the segmented image of the branching anatomical structure; determining whether the at least one geometric property of the segment is consistent with a shape of a branch in a branching anatomical structure; and determining whether the segment is an over-segmentation based on whether the at least one geometric property of the segment is determined to be consistent with the shape of a branch in a branching anatomical structure.

According to a third aspect, there is provided a computer program product comprising a computer readable medium, the computer readable medium having computer readable code embodied therein, the computer readable code being configured such that, on execution by a suitable computer or processor, the computer or processor is caused to perform the method as described above.

There is thus provided an improved method and system for determining over-segmentation in a segmented image of a branching anatomical structure, which overcomes the existing problems.

### BRIEF DESCRIPTION OF THE DRAWINGS

For a better understanding of the embodiments, and to show more clearly how they may be carried into effect, reference will now be made, by way of example only, to the accompanying drawings, in which:
Figure 1 is a block diagram of a system for determining over-segmentation in a segmented image of a branching anatomical structure according to an embodiment;
Figure 2 illustrates a computer-implemented method for determining over-segmentation in a segmented image of a branching anatomical structure, according to an embodiment;
Figure 3 illustrates an example embodiment of a computer-implemented method for determining over-segmentation in a segmented image of a branching anatomical structure; and
Figure 4 illustrates an output of a method of determining over-segmentation in a segmented image of a branching anatomical structure, according to an embodiment.

### DETAILED DESCRIPTION OF THE EMBODIMENTS

As noted above, there is provided an improved method and system for determining over-segmentation in a segmented image of a branching anatomical structure, which overcomes the existing problems.

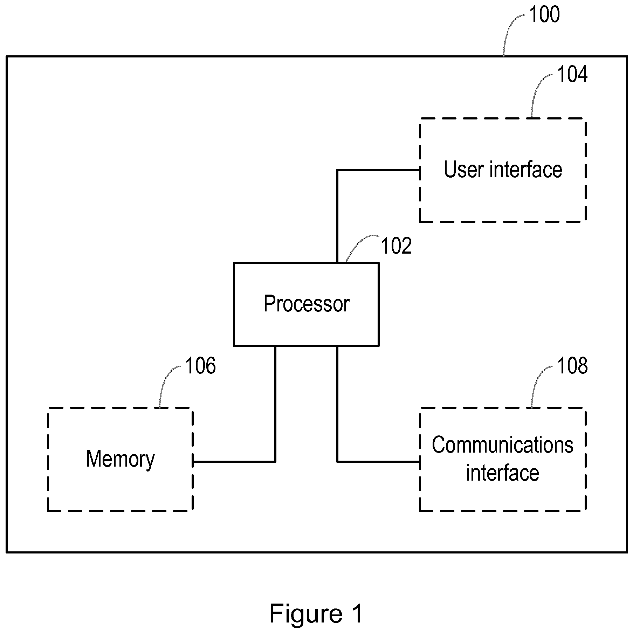

**Figure 1** shows a block diagram of a system 100 according to an embodiment that can be used for determining (or identifying or locating) over-segmentation (e.g. over-segmented segments) in a segmented image of a branching anatomical structure. A segmented image of a branching anatomical structure may be any image of a branching anatomical structure that is segmented (or divided, converted or partitioned) into a plurality of segments. With reference to Figure 1, the system 100 comprises a processor 102 that controls the operation of the system 100 and that can implement the method described herein.

The system 100 further comprises a memory 106 comprising instruction data representing a set of instructions. The memory 106 may be configured to store the instruction data in the form of program code that can be executed by the processor 102 to perform the method described herein. In some implementations, the instruction data can comprise a plurality of software and/or hardware modules that are each configured to perform, or are for performing, individual or multiple steps of the method described herein. In some embodiments, the memory 106 may be part of a device that also comprises one or more other components of the system 100 (for example, the processor 102 and/or one or more other components of the system 100). In alternative embodiments, the memory 106 may be part of a separate device to the other components of the system 100.

In some embodiments, the memory 106 may comprise a plurality of sub-memories, each sub-memory being capable of storing a piece of instruction data. In some embodiments where the memory 106 comprises a plurality of sub-memories, instruction data representing the set of instructions may be stored at a single sub-memory. In other embodiments where the memory 106 comprises a plurality of sub-memories, instruction data representing the set of instructions may be stored at multiple sub-memories. For example, at least one sub-memory may store instruction data representing at least one instruction of the set of instructions, while at least one other sub-memory may store instruction data representing at least one other instruction of the set of instructions. Thus, according to some embodiments, the instruction data representing different instructions may be stored at one or more different locations in the system 100. In some embodiments, the memory 106 may be used to store images, information, data, signals and measurements acquired or made by the processor 102 of the system 100 or from any other components of the system 100.

The processor 102 of the system 100 can be configured to communicate with the memory 106 to execute the set of instructions. The set of instructions, when executed by the processor may cause the processor to perform the method described herein. The processor 102 can comprise one or more processors, processing units, multi-core processors and/or modules that are configured or programmed to control the system 100 in the manner described herein. In some implementations, for example, the processor 102 may comprise a plurality of (for example, interoperated) processors, processing units, multi-core processors and/or modules configured for distributed processing. It will be appreciated by a person skilled in the art that such processors, processing units, multi-core processors and/or modules may be located in different locations and may perform different steps and/or different parts of a single step of the method described herein.

Returning again to Figure 1, in some embodiments, the system 100 may comprise at least one user interface 104. In some embodiments, the user interface 104 may be part of a device that also comprises one or more other components of the system 100 (for example, the processor 102, the memory 106 and/or one or more other components of the system 100). In alternative embodiments, the user interface 104 may be part of a separate device to the other components of the system 100.

A user interface 104 may be for use in providing a user of the system 100 (for example, a medical personnel, a healthcare provider, a healthcare specialist, a care giver, a subject, or any other user) with information resulting from the method according to embodiments herein. The set of instructions, when executed by the processor 102 may cause processor 102 to control one or more user interfaces 104 to provide information resulting from the method according to embodiments herein. Alternatively or in addition, a user interface 104 may be configured to receive a user input. In other words, a user interface 104 may allow a user of the system 100 to manually enter instructions, data, or information. The set of instructions, when executed by the processor 102 may cause processor 102 to acquire the user input from one or more user interfaces 104.

A user interface 104 may be any user interface that enables rendering (or output or display) of information, data or signals to a user of the system 100. Alternatively or in addition, a user interface 104 may be any user interface that enables a user of the system 100 to provide a user input, interact with and/or control the system 100. For example, the user interface 104 may comprise one or more switches, one or more buttons, a keypad, a keyboard, a touch screen or an application (for example, on a tablet or smartphone), a display screen, a graphical user interface (GUI) or other visual rendering component, one or more speakers, one or more microphones or any other audio component, one or more lights, a component for providing tactile feedback (e.g. a vibration function), or any other user interface, or combination of user interfaces.

In some embodiments, as illustrated in Figure 1, the system 100 may also comprise a communications interface (or circuitry) 108 for enabling the system 100 to communicate with interfaces, memories and/or devices that are part of the system 100. The communications interface 108 may communicate with any interfaces, memories and devices wirelessly or via a wired connection.

It will be appreciated that Figure 1 only shows the components required to illustrate this aspect of the disclosure and, in a practical implementation, the system 100 may comprise additional components to those shown. For example, the system 100 may comprise a battery or other power supply for powering the system 100 or means for connecting the system 100 to a mains power supply.

In more detail, as noted above, the memory 106 comprises instruction data representing a set of instructions. Briefly, the set of instructions, when executed by the processor 102 of the system 100 cause the processor 102 to determine at least one geometric property of a segment of the segmented image of the branching anatomical structure and determine whether the at least one geometric property of the segment is consistent with a shape of a branch in a branching anatomical structure. The set of instructions, when executed by the processor 100 further cause the processor to determine whether the segment is an over-segmentation based on whether the at least one geometric property of the segment is determined to be consistent with the shape of a branch in a branching anatomical structure.

In embodiments herein, a branching anatomical structure refers to any anatomical structure that divides from a central point (or trunk) into a plurality of branches (e.g. successively smaller and/or narrower branches). Thus, a branching anatomical structure may be any anatomical structure that comprises a "tree-like" structure. In some embodiments, the branching anatomical structure may comprise a vascular structure. For example, in some embodiments, the branching anatomical structure may comprise a vascular structure such as a coronary artery. In such embodiments, a branch of the vascular structure can, for example, comprise a vessel (such as an artery). In such embodiments, the trunk of the vascular structure may comprise a principle artery. In embodiments where the vascular structure is associated with the heart, the trunk of the structure may refer to the main (e.g. major) coronary artery (e.g. the portion of the coronary artery from which other portions of the coronary artery branch). In general, however, it will be understood that the "trunk" may also refer to the largest artery present in the segmented image. In other embodiments, the branching anatomical structure may comprise a bronchial tree. In such embodiments, a branch of a bronchial tree can, for example comprise a bronchus. In such embodiments, the trunk of the bronchial tree may comprise the left primary bronchus or the right primary bronchus. In general, however, it will be understood that the "trunk" of a bronchial tree may also refer to the largest bronchus present in the segmented image. Although some examples have been provided for the branching anatomical structure, it will be understood that the system and method described herein may also be used in respect of any other branching anatomical structure, for example, the vascular structure of a limb or other anatomical structure (e.g. organ).

In any of the embodiments described herein, the segmented image can be a two-dimensional segmented image, a three-dimensional segmented image, or any other dimensional image that is segmented. The segmented image may comprise a plurality of image components. In embodiments where the segmented image is a two-dimensional segmented image, the image components are pixels. In embodiments where the segmented image is a three-dimensional segmented image, the image components are voxels.

The image can, for example, be a medical image, or any other type of image of a branching anatomical structure. The image may be acquired using any imaging modality. Examples of medical image modalities include, but are not limited to, a computed tomography (CT) image (for example, from a CT scan) such as a C-arm CT image, a spectral CT image or a phase contrast CT Image, an x-ray image (for example, from an x-ray scan), a magnetic resonance (MR) image (for example, from an MR scan), an ultrasound (US) image (for example, from an ultrasound scan), fluoroscopy images, nuclear medicine images, or any other medical image of a branching anatomical structure. Although examples have been provided for the type of image, a person skilled in the art will appreciate that the teachings provided herein may equally be applied to any other type of image of a branching anatomical structure.

As mentioned earlier, the segmented image comprises a segmented image of branching anatomical structure. For example, the segmented image may comprise a vascular structure, a bronchial tree, or any other type of branching anatomical structure. The segmented image may further comprise other anatomical structures or other portions of anatomical structures, such as the heart and/or portions of neighbouring bones. It will be appreciated that the image may not necessarily comprise an entire section of the branching anatomical structure and may, for example, only comprise part of the structure and/or, if other anatomical structures are also present in the segmented image, part(s) of the other anatomical structures.

As mentioned earlier, a segmented image of a branching anatomical structure may be any image of a branching anatomical structure that is segmented (or divided, converted or partitioned) into a plurality of segments. The segmented image of the branching anatomical structure may be segmented using any appropriate segmentation procedure. The person skilled in the art will be familiar with segmentation and different segmentation processes that may be used. Briefly, segmentation is where an image is segmented (or divided, converted or partitioned) into a plurality of different segments (or portions, blocks, or shapes). For example, each segment may correspond to a group of image components that are related in some way (e.g. all image components that lie within a boundary, predefined area or region), or share a common characteristic (e.g. connected image components having values within a predefined range). Segmentation may be used to delineate or highlight parts of an anatomical structure in the image, shapes in the image and/or other objects that have identifiable outlines (e.g. boundaries or edges) in the image. In some embodiments, the segmented image may be a manually segmented image. For example, a user may manually convert the image into a plurality of segments, for example, by identifying (for example, by drawing or tracing) different features in the image, such as different anatomical features in the image, or any other identifiable features in the image. In other embodiments, the segmented image may be an output of a computer-implemented segmentation process (e.g. an "auto-segmentation" algorithm that automatically segments images for the user). Examples of computer-implemented segmentation processes include, for example, a model-based segmentation. A person skilled in the art will be familiar with model-based segmentation. However, briefly, model-based segmentation comprises fitting a model (for example, a model of a branching anatomical structure) to the contents of the image (for example, a branching anatomical structure in the image). Other types of segmentation processes include graph partitioning methods, partial differential equation-based methods, region-growing methods, edge-detection based methods, and the person skilled in the art will be familiar with these processes.

As described above, in a segmentation process, an image is segmented (or divided, converted, or partitioned) into a plurality of segments. Alternatively, the image may be overlain with a plurality of segments. Generally, each segment in the segmented image corresponds to one or more features or structures present in the (original) image, such as one or more anatomical features or anatomical structures present in the (original or unsegmented) image. However, as noted above, sometimes over-segmentation occurs, whereby the segmentation process (which may be a manual segmentation process or computer-implemented segmentation process) produces one or more segments that do not correspond to a real feature or structure in the (original) image. For example, due to effects such as image artefacts, poor image quality, or missing data (e.g. the "partial volume problem"), segments may be formed where a feature or structure (such as a branch in a branching anatomical structure) does not actually exist. Such segments may be considered to be "false-positive" detections of a feature or structure in the segmented image. In segmented images of branching anatomical structures (such as a vascular structure, or a bronchial tree), it can be difficult to effectively remove segments corresponding to over-segmentation, particularly if the segments are elongated and thus superficially appear to have a similar structure to real features or structures (such as vessels or bronchi respectively).

As mentioned earlier, the set of instructions, when executed by the processor 102 of the system 100, cause the processor 102 to determine at least one geometric property of a segment of the segmented image of the branching anatomical structure and determine whether the segment is an over-segmentation by determining whether the at least one geometric property is consistent with a shape of a branch in a branching anatomical structure. In this way, the system 100 can quickly and efficiently determine (or identify or locate) segments in the segmented image of the branching anatomical structure that correspond to over-segmentations and therefore do not correspond to real branches in the branching anatomical structure. Such over-segmentation can thus be removed from the segmented image, to produce a more accurate segmentation of the branching anatomical structure.

In more detail, as described briefly above, the set of instructions, when executed by the processor, cause the processor to determine at least one geometric property of a segment of the segmented image of the branching anatomical structure. The segment may be any segment in the segmented image (for example, as will be described in more detail below, the methods described herein may be applied to each segment of the segmented image, taken in turn, according to some embodiments). In some embodiments, the segment may be selected as a possible (e.g. candidate) branch of the branching anatomical structure (for example, a segment that appears to be a vessel or bronchus in a segmented image of a vascular structure or a bronchial tree, respectively).

The at least one geometric property may comprise, a radius of the segment, a diameter of the segment, a circumference of the segment, a cross-sectional area of the segment, a volume of the segment, or any other geometric property that can be determined for the segment or a portion of the segment.

In some embodiments, the set of instructions, when executed by the processor, may cause the processor 102 to determine a first geometric property of the segment in a first portion of the segment, and determine a second geometric property of the segment in a second portion of the segment. In these embodiments, the first portion lies closer to the trunk of the branching anatomical structure than the second portion. For example, in some embodiments, the first portion of the segment may correspond to an end of the segment and the second portion of the segment may correspond to an opposite end of the segment. Thus, properties the segment can be measured at opposite ends of the segment, or in portions of the segment where one portion of the segment lies closer to one end of the segment and the other portion lies closer to the another (for example, opposite) end of the segment. As an example, in an embodiment where the branching anatomical structure comprises a vascular structure, and the segment corresponds to a possible (e.g. candidate) vessel in the vascular structure, a first geometric property of the segment (such as, for example, the cross-sectional area of the segment) may be determined in a first portion of the segment. A second geometric property of the same segment may be determined in a second portion of the segment that lies further away from the trunk (e.g. the principal vessel) of the vascular structure in the image. In this sense, the second portion may be considered to lie "downstream" of the first portion in the branched hierarchy of the vascular structure.

In some embodiments, where first and second geometric properties are determined, the segment may be effectively split in two, such that the first geometric property is determined in a portion of the segment lying closer to the trunk of the segment than the centre of the segment and the second geometric property is determined in a portion of the segment lying in the opposite half of the segment (e.g. that lies closer to an opposite end of the segment to the trunk). The advantage of spacing the portions in which the first and second geometric properties are determined in this way is that a change in shape of the segment may be more apparent when comparing opposite ends of the segment, as opposed to neighbouring portions of the segment.

The person skilled in the art will appreciate that the examples of types of geometric properties, number of geometric properties determined and the locations in the segment where the geometric properties are determined, as given above, are merely exemplary and that other combinations are possible. For example, in some embodiments, a geometric property may be determined for a single portion (e.g. at a single location) on the segment. In other embodiments, a pair of geometric properties may be determined, for example, in different portions of the segment. In some embodiments, for each portion of the segment where a geometric property is measured, a single type of geometric property (e.g. radius, cross-sectional area etc.) may be measured for each portion. In some embodiments, different geometric properties may be measured in each portion, for example, the first and second geometric properties may be different geometric properties (e.g. a cross-sectional area may be determined in the first portion of the segment and a radius may be determined at the second portion of the segment). In some embodiments, more than one geometric property may be determined at a particular location, or in a portion of the segment (for example, both the radius and cross-sectional area may be determined at each end of the segment). In some examples, three or more geometric properties may be determined. For example, in some examples, a geometric property (or properties) may be determined at equally spaced intervals along the length of the segment. The person skilled in the art will appreciate that the appropriate number of geometric properties that are determined, the type of geometric property determined and the locations of the determinations of the geometric property in the segment will depend on the application (e.g. the size of segments, required accuracy, available computing power, etc).

As described briefly above, after the at least one geometric property of the segment has been determined, the set of instructions, when executed by the processor, cause the processor to determine whether the at least one geometric property of the segment is consistent with a shape of a branch in a branching anatomical structure. Determining whether the at least one geometric property is consistent with a shape of a branch may comprise, for example, determining whether the at least one geometric property is within a predetermined range of a shape variability (for example, whether the geometric property is within a predetermined range of shapes typically associated with, or observed in segments corresponding to real branches of a branching anatomical structure).

In some embodiments, determining whether the at least one geometric property is consistent with a shape of a branch may comprise determining, from the at least one geometric property, that the shape of the segment has a property associated with real branches (e.g. a reference shape property). Examples of reference shape properties include that the segment tapers as it extends further away from the trunk of the branching anatomical structure. In other words, determining whether the at least one geometric property is consistent with a branch in a branching anatomical structure may comprise determining whether the end of the segment that lies furthest away from the trunk of the branching anatomical structure is smaller (e.g. narrower) than the end of the segment that lies closest the trunk (as is generally the case for branching anatomical structures such as vessels or bronchi). In some embodiments, the shape of a segment may be determined to be inconsistent with the shape of a branch in a branching anatomical structure if the at least one geometric property indicates that the segment increases in size (e.g. radius) further away from the trunk. Other examples of how it may be determined that a segment is consistent with the shape of a branch include determining that the segment is elongated (e.g. generally branch shaped) and/or determining that the segment does not have lobes or protrusions that would be inconsistent with the segment corresponding to a branch of the branching anatomical structure. The person skilled in the art will appreciate however that these examples are non-exhaustive and that there are other ways of determining whether the shape of a segment is consistent with the shape of a branch of a branching anatomical structure.

In embodiments where a first and second geometric property is determined, causing the processor to determine whether the at least one geometric property of the segment is consistent with a shape of a branch in the branching anatomical structure may, in some embodiments, comprise causing the processor to compare the first and second geometric properties of the segment.

AS noted above, in general, branches of a branching anatomical structure become narrower as they extend further from the trunk of the branching anatomical structure. For example, the diameter of each vessel in a vascular structure steadily decreases from the end of the vessel closest to (e.g. joining to) the trunk, to the far end of the vessel (e.g. the next bifurcation in the branching anatomical structure). In other words, generally, vessels become narrower the further downstream they are of the trunk of the branching anatomical structure. As such, in embodiments where first and second geometric properties of the segment are determined in first and second portions of the segment and where the first portion lies closer to the trunk of the branching anatomical structure than the second portion, the first and second geometric properties may be consistent with the segment comprising a branch if the first geometric property (determined closer to the trunk) is larger than the second geometric property (determined further "downstream" of the trunk). As such, the set of instructions, when executed by the processor 102 may cause the processor 102 to determine that the segment is an over-segmentation if the second geometric property of the segment is larger than the first geometric property of the segment. Conversely, the set of instructions, when executed by the processor 102 may cause the processor 102 to determine that the segment corresponds to a (real) branch of the branching anatomical structure in the segmented image if the second geometric property of the segment is smaller than the first geometric property of the segment.

In this manner, segments corresponding to over-segmentation can be easily found in a segmented image of a branching anatomical structure by comparing the geometric properties of one end of the segment to those at the other end of the segment and determining whether the end of the segment that lies closest to the trunk is larger (e.g. has a larger cross-sectional area/radius/circumference, etc.) than the end of the segment that lies furthest away from the trunk. This provides an efficient method of removing over-segmentation from an image of a branching anatomical structure.

Turning now to more detailed embodiments, in some embodiments, the set of instructions, when executed by the processor 102 may cause the processor 102 to perform various pre-processing steps to those described above, as detailed below.

As described above, in some embodiments, the processor 102 may be provided with the segmented image, for example, the system 100 may receive or acquire the segmented image from an external source or retrieve the segmented image from a database. In alternative embodiments, the processor 102 may begin with the (original) image and the set of instructions, when executed by the processor, may cause the processor 102 to segment the image, using any of the segmentation processes described above.

In some embodiments, the set of instructions, when executed by the processor, may cause the processor 102 to apply a thinning operation to the segment. Thinning is a technique that will be familiar to the person skilled in the art. However, briefly, a thinning technique comprises producing a thin (e.g. line drawing) version of a shape. The lines of the thinned shape may, for example, lay equidistant to the boundaries of the shape. As an example, a thinned image of a person may produce a "stick-man" (e.g. line drawing) of the person. In the example of a segment corresponding to a branching anatomical structure, a thinning operation may convert the segment into a line passing through the centre of the segment. Thinning in this way reduces the segment into a line, which may be easier and more computationally efficient to process in the method described herein than the entire segment. The output of a thinning operation performed on a segment is described herein as a "thinned segment".

In some embodiments, the set of instructions, when executed by the processor, may cause the processor 102 to determine the location of an end of the segment by determining (or identifying or locating) an image component in the thinned segment that has only one neighbour in the thinned segment (the end of the segment thus corresponds to the end of the thinned segment). For example, in three-dimensions where an image component is a voxel, the location of an end of the thinned segment is determined by determining (or identifying or locating) a voxel whose 26-neighborhood only has one neighbour in the thinned segment. The 26-neighbourhood of a voxel comprises the 26 voxels in the three-dimensional image that surround (either with a touching side, or that lie directly diagonal to) said voxel. If there are two or more neighbouring voxels in the thinned segment in the 26-neighbourhood of the voxel, then the voxel is not at an end of the thinned segment, whereas if there is only one neighbouring voxel in the 26-neighbourhood of the voxel, then the voxel is an end point.

In some embodiments, the set of instructions, when executed by the processor, may cause the processor 102 to determine a root point of the thinned segment, where the root point corresponds to a part (e.g. an end) of the thinned segment that lies closest to the trunk of the branching anatomical structure. In this sense, a part of the thinned segment lies closest to the trunk if it lies closest on the shortest path from the trunk, through the branching anatomical structure, to the segment (which may be different, for example, to the shortest Euclidean distance). In examples where the branching anatomical structure comprises a vascular structure, the root point may comprise the point closest to the main coronary artery.

In some embodiments, the set of instructions, when executed by the processor, may cause the processor 102 to determine the location of the segment (e.g. the location of the points lying between the root point and the determined (opposite) end) in the segmented image by determining the points in the thinned segment that lie between the determined root point and the determined end of the segment.

In some embodiments, the set of instructions, when executed by the processor, further cause the processor 102 to determine whether the segment comprises a burr. A burr is a false protuberance (e.g. a small bump or artefact of the segmentation) caused by an unsmooth segmentation. Despite being artefacts, burrs may appear to be (e.g. can be mistaken for) relatively small branches in a segmentation of a branching anatomical structure. In some embodiments, therefore, the set of instructions, when executed by the processor, may further cause the processor 102 to determine a length of the segment and determine the segment is a burr of the segmentation if the length of the segment is lower than a threshold. In some examples, real branches (e.g. vessels or bronchi) may appear to be shorter than they really are, if they are overlapped in the image by another branch. Therefore, in some embodiments, the set of instructions, when executed by the processor, may further cause the processor 102 to determine whether the segment is overlapped by another segment of the segmented image and determine the segment is a burr of the segmentation if the segment is not overlapped and the length is lower than a threshold. Burrs may be discarded or removed from the segmentation and/or removed from further consideration of the branching anatomical structure.

In some embodiments, a centreline is calculated between the end of the thinned segment and the root point of the thinned segment. Although the points of the thinned segment (which is the output of the thinning operation) lie geometrically at the centre of the segment, e.g. equidistant from the sides of the segment, the thinned segment is often an unsmooth line and thus if a geometric property is measured perpendicular to the thinned line (e.g. such as a cross-sectional area or radius), then this may not necessarily be perpendicular to the branch itself. As such, a "smoothing" may be performed on the thinned segment to find a centreline from which to calculate the at least one geometric property. In this respect, therefore, the centreline can be a smoothed version of the points of the thinned segment. In some embodiments, the centreline is calculated by initially sampling the points of the thinned segment to obtain control points, and then interpolating these control points to obtain interpolation points. These interpolation points are then adjusted based on segmentation to get the centreline. In some embodiments, the interpolation may be performed iteratively (e.g. twice) to increase the accuracy of the centreline (where the input path for the second time is the resulting centreline of the first time). In this way, it is ensured that the measurements of the at least one geometric property are measured consistently such that geometric properties measured in one portion of the segment can be directly compared to measurements in another portion of the segment.

In some embodiments, the centreline may be used in the determination of the at least one geometric property. For example, the centreline may be used to determine a plane in which to determine the at least one geometric property, such as a radius, cross-sectional area or circumference. In some embodiments, the at least one geometric property may be determined, for example, in a plane perpendicular to the centreline. In embodiments where the at least one geometric property comprises two or more geometric properties, the centreline may further be used to determine an appropriate spacing at which to determine the first, second and any subsequent geometric properties (e.g. the first and second geometric properties may be determined, for example, at a quarter and at three quarters of the length of the centreline respectively). Once the at least one geometric property is determined, it is then determined whether the segment is an over-segmentation or whether the segment corresponds to a real feature, according to the procedure described earlier.

In some embodiments, the procedure of any of the embodiments described herein is repeated for other segments in the segmented image. For example, in some embodiments, the set of instructions, when executed by the processor, may cause the processor 102 to repeatedly, for a plurality of segments in the segmented image of the branching anatomical structure: i) determine at least one geometric property of a segment of the segmented image of the branching anatomical structure, (ii) determine whether the at least one geometric property of the segment is consistent with a shape of a branch in a branching anatomical structure, and (iii) determine whether the segment is an over-segmentation based on whether the at least one geometric property of the segment is determined to be consistent with the shape of a branch in a branching anatomical structure.

In any of the embodiments described herein, once a determination has been made as to whether a segment is an over-segmentation, various post-processing steps may also be performed. For example, in some embodiments, the set of instructions, when executed by the processor 102, may cause the processor 102 to control one or more user interfaces 104 to render (or output or display) the segment and/or provide an indication of whether the segment is determined to be an over-segmentation.

In some embodiments, if a segment is determined to correspond to a real branch (e.g. the segment is not an over-segmentation), then a tubular model may be fit to the segment. Real branches (e.g. vessels/bronchus) have tubular shapes and this allows the extent of the segment to be determined. In some embodiments, each image component (e.g. pixel or voxel) in the segmented image may be marked as comprising part of a real branch or comprising over-segmentation according to whether the image component lies within a fitted tube (e.g. all image components lying within a fitted tube may be marked as "real" branches, and all other image components may then be marked as over-segmentation). In this way, all of the image components considered to be part of real branches of the branching anatomical structure in the segmented image, can be highlighted to the user.

In some embodiments, a user can then provide a user input providing a confirmation of whether segment is an over-segmentation (for example, the user may indicate that they agree that the segment is an over-segmentation or the user may indicate that they disagree that a segment is an over-segmentation). Thus, in some embodiments, the set of instructions, when executed by the processor 102, may cause the processor 102 to receive a user input, where the user input provides a confirmation of whether the segment is an over-segmentation. In some embodiments, the set of instructions, when executed by the processor 102, may cause the processor 102 to remove the segment from the segmented image if the user input confirms the segment is an over-segmentation.

In some embodiments, the user may provide an indication of an over-segmentation by clicking on a point in the rendered segmented image. The point may coincide with a segment that the user considers to be an over-segmentation. The indicated segment may be removed from the segmented image using a region-growing routine that takes the point indicated by the user as a seed point in the region-growing routine. The skilled person will be familiar with region growing routines. In some embodiments, the region-growing may start from the point indicated by the user (indicating a segment that the user considers to be over-segmentation) and expands (e.g. the point is grown) based on neighbouring image components (pixels in a two-dimensional image or voxels in a three-dimensional image) that are indicated as over-segmentation in the image (e.g. the expansion occurs based on whether the system considers neighbouring points to be over-segmentation). The region-growing routine is used to determine the full area (or volume) of the segment to be removed from the segmented image). Once the area (or volume) of the segment is determined, it can be removed from the segmentation. In this way, an over-segmentation can be removed from an image in one simple click from the user, negating the need for the user to trace over, or indicate the full extent of the segment that is to be removed from the segmentation. In some embodiments, a segment will only be removed if it is also determined that the segment indicated by the user corresponds to an over-segmentation according to the process outlined above. This acts as a double-check for the user, improving the accuracy with which over-segmented segments can be removed from a segmented image.

In this way, there is provided a full process for determining over-segmentation in a segmented image of a branching anatomical structure, highlighting the over-segmentation to a user and removing said over-segmentation, based in part on user feedback. The person skilled in the art will appreciate that the processes above are merely exemplary and that the set of instructions, when executed by the processor, may cause the processor 102 to perform additional processes to those outlined above. For example, the processor 102 may be caused to automatically discard or remove any determined over-segmentation, irrespective of user feedback.

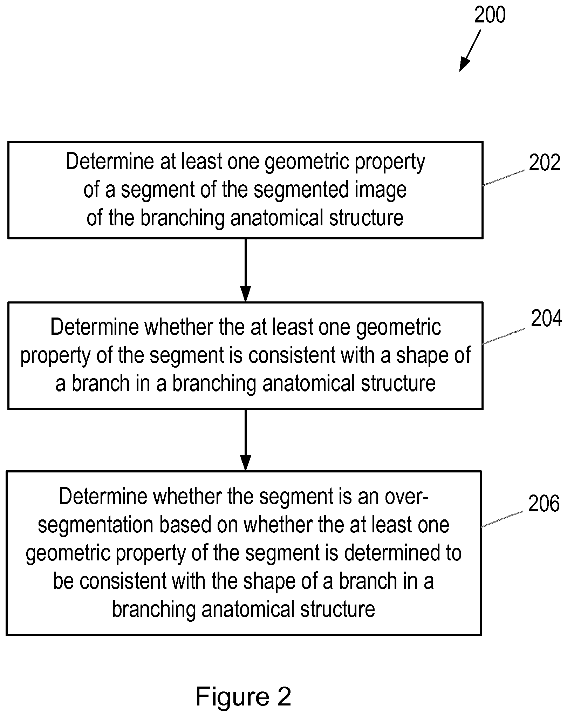

**Figure 2** illustrates a computer-implemented method 200 for determining over-segmentation in a segmented image of a branching anatomical structure, according to an embodiment. The illustrated method 200 can generally be performed by or under the control of the processor 102 of the system 100. The method may be partially or fully automated according to some embodiments.

Briefly, with reference to Figure 2, the method 200 comprises determining at least one geometric property of a segment of the segmented image of the branching anatomical structure (at block 202 of Figure 2), and determining whether the at least one geometric property of the segment is consistent with a shape of a branch in a branching anatomical structure (at block 204 of Figure 2). The method 200 also comprises determining whether the segment is an over-segmentation based on whether the at least one geometric property of the segment is determined to be consistent with the shape of a branch in a branching anatomical structure (at block 206 of Figure 2).

As noted above, generally, the segments of a segmented image correspond to real features or structures of the (original) image (e.g. real branches of the branching anatomical structure), however, sometimes over-segmentation occurs, whereby the segmentation process produces a segment that does not correspond to a real structure (e.g. branch of the branching anatomical structure) in the (original) image. In segmented images of branching anatomical structures such as a vascular structure, or a bronchial tree, it can be difficult to effectively remove segments corresponding to over-segmentation, particularly if the segments are elongated and thus appear to have similar structure to real vessels or bronchi respectively. According to the method 200, over-segmentation may be removed from a segmented image of a branching anatomical structure by determining, based on at least one geometric property of a segment, whether the segment is consistent with a shape of a branch of a branching anatomical structure. In this way, over-segmentation can quickly and easily be removed from a segmented image of a branching anatomical structure.

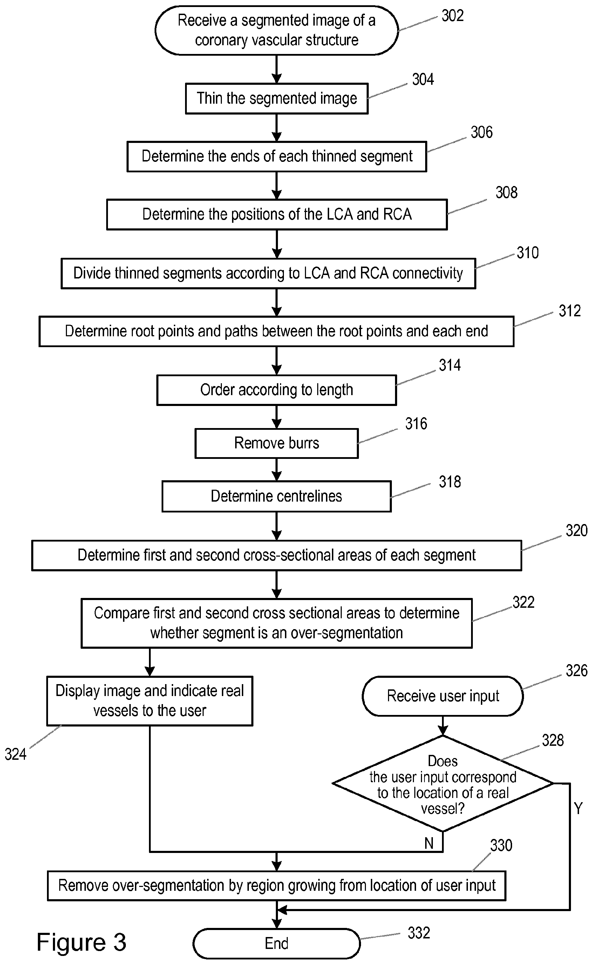

**Figure 3** shows an example embodiment of a method 300 of determining over-segmentation in a segmented image of a branching anatomical structure. In this example embodiment, the branching anatomical structure comprises a vascular structure emanating from the heart and the segmented image comprises the coronary vascular structure. In this example embodiment, there are two "trunks" of the vascular structure in the form of the main left coronary artery, LCA, and the main right coronary artery, RCA. The segmented image in this example embodiment therefore comprises a segmented image of the left and right coronary arteries.

According to the method 300 of Figure 3, in block 302, the method comprises receiving the segmented image of the coronary vascular structure. As noted above with respect to the description of the segmented image described with respect to the system 100, the segmented image may be segmented using any appropriate segmentation technique including but not limited to the techniques described above.

In block 304, the segments of the segmented image are thinned by applying a thinning operation to each segment, to produce a plurality of thinned segments. The segments may be thinned in the same manner as was described above in detail with respect to system 100 and the details therein will be understood to equally apply to block 304.

In block 306, the ends of each thinned segment in the plurality of thinned segments are determined. As described above with respect to system 100, in three-dimensional segmented images comprising a plurality of voxels, ends may be determined as points in each thinned segment whose 26-neighborhood only has one thinning neighbour. Determining ends was described above in detail with respect to system 100 and the details therein will be understood to apply equally to block 306.

In block 308, the positions of the main left coronary artery, LCA, and the main right coronary artery, RCA (e.g. the trunks of the branching vascular structure) are determined, using a region growing algorithm, starting from the aortic centre (the aortic centre may be determined from the segmented image, for example, if the segmentation process used to segment the image was a model-based segmentation comprising a model including the aortic centre). Region growing algorithms were described above with respect to system 100 and the details therein will be understood to equally apply to block 308.

Once the locations of the main coronary arteries are established, in block 310, the end points of each thinned segment, as determined in block 306 are divided into two groups, according to whether they join (e.g. are connected to) to the left or right main coronary artery.

In block 312, as described above, the root point of each segment is determined as the part of each segment that lies closest to the trunk (e.g. the left or right main coronary artery depending on which main coronary artery the particular segment is a branch (or offshoot) of). Determining the root point of a segment was described further with respect to system, 100 above and the details therein will be understood to equally apply to block 312. A path between each root point and end of the segment in the segmented image (e.g. passing through the middle of the segment) is then determined by determining the points in the thinned segment that lie between the determined root point and the determined end of the segment. This was also described above with respect to system 100, and the details therein will be understood to equally apply to block 312.

In block 314, the segments are ordered according to length (e.g. in descending order).

In block 316, burrs (artefacts of the segmentation process that manifest as small protrusions or "bumps" that are caused by unsmooth segmentation) are determined by determining segments that are not overlapped with lengths lower than a threshold. This process was described in more detail above with respect to system 100 and the details therein will be understood to equally apply to block 316. Once determined, burrs are removed from the segmented image.

In block 318, for each segment, a centreline is determined that lies along the centre of the segment. The centre is determined from the thinned segment, according to the procedure described above with respect to system 100 and the details therein will be understood to equally apply to block 318.

In block 320, at least one geometric property of each segment is determined. In this embodiment, the determined geometric property is the cross-sectional area of the segment. In this embodiment, the cross-sectional area is determined in two places for each segment; a first measure of the cross-sectional area (e.g. a first geometric property) is determined at a first position located closer to the root side of the segment than the end of the segment, and a second measure of the cross-sectional area (e.g. a second geometric property) is determined at a second position that lies closer to the end of the segment than the root side. Determining first and second geometric properties in this manner was described above with respect to system 100 and the details therein will be understood to equally apply to block 320.

In block 322, it is determined whether the determined first and second measures of the cross-sectional area (e.g. the first and second geometric properties) are consistent with a shape of a branch in a branching anatomical structure. In this embodiment, for each segment, the first and second measures of the cross-sectional area are compared. As described above with respect to system 100, a segment is determined to be an over-segmentation if it has a root-side cross-sectional area (e.g. the first geometric property) that is smaller than an end-side cross-sectional area (e.g. the second geometric property). This would indicate that the segment increases in width the further away (e.g. the further "downstream") from the main coronary artery to which the vessel joins to. This is inconsistent with the shape of vessels, which generally become progressively narrower as they extend and branch further out from the main coronary artery. Conversely, a segment is determined to correspond to a (real) vessel if its shape is consistent with the shape of a branch, e.g. if it has a root-side cross-sectional area (e.g. first geometric property) that is larger than the end-side cross-sectional area (e.g. second geometric property). In this way, each segment is labelled as either an over-segmentation or a real vessel. Determining whether a segment is an over-segmentation in this manner was described above with respect to system 100 and the details therein will be understood to equally apply to block 322.

In block 324, the segmented image is displayed to a user and segments determined to be normal vessels are indicated to the user by marking the relevant segments as "real" vessels. For example, segments corresponding to real vessels may be highlighted in a different colour to the user.

In block 326, a user input is received, for example, in the form of a mouse-click on a region of the segmented image. The mouse-click indicates that the user considers the segment at the location of the click to correspond to an over-segmentation.

At block 328, it is determined whether the location corresponds to the location of a segment that was indicated in block 324 as a real vessel.

If it is determined in block 328 that the location of the user input does not correspond to a location of a segment that was indicated as a real vessel (e.g. the segment clicked on by the user is an over-segmentation), then in block 330, the segment is removed from the image, using a region-growing procedure to determine the extent of the relevant segment, using the location of the user input as a starting point. The use of a user input as a seed point for a region-growing procedure was described above with respect to system 100, and the details therein will be understood to equally apply to block 328.

Alternatively, if it is determined in block 328 that the location corresponds to the location of a segment that was indicated as a real vessel (e.g. not an over-segmentation), then in block 332, the method ends, without deleting the segment indicated by the user in the user input received in block 326.

In this way a double-check is made on a suspected over-segmentation such that a segment is only removed from the segmented image if it is determined to be an over-segmentation and if a user confirms it as being so. In this way, over-segmentation can easily be removed from a segmented image, using a method that only requires a single input (e.g. mouse-click) from the user. This is more efficient than other methods that may require a user to manually erase or cut out the full segment.

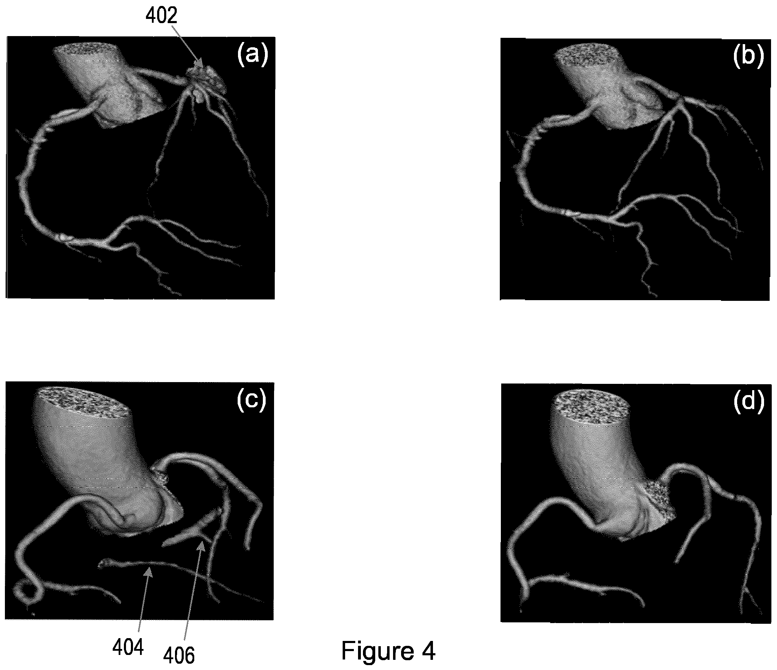

Turning now to **Figure 4,** Figure 4a shows a segmented image of a branching anatomical structure and, more specifically, a coronary vascular structure. Figure 4b shows the same segmented image as in Figure 4a, after the method illustrated in Figure 3 is applied to the segmented image. As can be seen, segment 402 has been removed in Figure 4b (compared to Figure 4a) as over-segmentation. Figure 4c shows another portion of the segmented coronary vascular structure and the output of the method of Figure 3, as applied to Figure 4c, is shown in Figure 4d. As can be seen, segments 404 and 406 have been removed during the method 300 as over-segmentation. In this way, over-segmentation has been removed from the segmented image, to leave only those segments that are most likely to correspond to real vessels in the segmented image of the vascular structure.

There is thus provided herein an improved method and system for determining over-segmentation in a segmented image of a branching anatomical structure, which overcomes the existing problems.

There is also provided a computer program product comprising a computer readable medium, the computer readable medium having computer readable code embodied therein, the computer readable code being configured such that, on execution by a suitable computer or processor, the computer or processor is caused to perform the method or methods described herein. Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art, from a study of the drawings, the disclosure and the appended claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A system (100) configured for determining over-segmentation in a segmented image of a branching anatomical structure, wherein the segmented image of the branching anatomical structure comprises a plurality of segments, the system comprising:
a memory (106) comprising instruction data representing a set of instructions;
a processor (102) configured to communicate with the memory and to execute the set of instructions, wherein the set of instructions, when executed by the processor, cause the processor to:
determine at least one geometric property of a segment of the segmented image of the branching anatomical structure;
determine whether the at least one geometric property of the segment is consistent with a shape of a branch in a branching anatomical structure; and
determine whether the segment is an over-segmentation based on whether the at least one geometric property of the segment is determined to be consistent with the shape of a branch in a branching anatomical structure.

2. The system (100) of claim 1 wherein causing the processor (102) to determine at least one geometric property of the segment comprises causing the processor to:
determine a first geometric property of the segment in a first portion of the segment; and
determine a second geometric property of the segment in a second portion of the segment;
wherein the first portion lies closer to a trunk of the branching anatomical structure than the second portion.

3. The system (100) of claim 2 wherein causing the processor (102) to determine whether the at least one geometric property of the segment is consistent with a shape of a branch in the branching anatomical structure comprises causing the processor to:
compare the first and second geometric properties of the segment.

4. The system (100) of claim 3 wherein the set of instructions, when executed by the processor (102) cause the processor to:
determine that the segment is an over-segmentation if the second geometric property of the segment is larger than the first geometric property of the segment.

5. The system (100) of claim 3 wherein the set of instructions, when executed by the processor (102) cause the processor to:
determine that the segment corresponds to a branch of the branching anatomical structure in the image if the second geometric property of the segment is smaller than the first geometric property of the segment.

6. The system (100) of any one of the preceding claims wherein the set of instructions, when executed by the processor (102), further cause the processor to:
apply a thinning operation to the segment to produce a thinned segment; and
determine the location of an end of the segment by determining an image component in the thinned segment that has only one neighbour in the thinned segment.

7. The system (100) of claim 6 wherein the set of instructions, when executed by the processor (102), further cause the processor to:
determine a root point of the thinned segment, the root point of the segment corresponding to a part of the segment that lies closest to the trunk of the branching anatomical structure.

8. The system (100) of claim 7 wherein the set of instructions, when executed by the processor (102), further cause the processor to:
determine the location of the segment in the segmented image by determining
the points in the thinned segment that lie between the determined root point and
the determined end of the segment.

9. The system (100) of any one of the preceding claims wherein the set of instructions, when executed by the processor (102), further cause the processor to:
determine a length of the segment;
determine whether the segment is overlapped by another segment of the segmented image of the branching anatomical structure; and
determine the segment is a burr of the segmentation if the segment is not overlapped and the length is lower than a threshold.

10. The system (100) of any one of the preceding claims wherein the at least one geometric property comprises:
a radius of the segment;
a diameter of the segment;
a circumference of the segment;
a cross-sectional area of the segment; or
a volume of the segment.

11. The system (100) of any one of the preceding claims wherein the branching anatomical structure comprises one of:
a vascular structure wherein a branch in the vascular structure comprises a vessel; and
a bronchial tree wherein a branch in the bronchial tree comprises a bronchus.

12. The system (100) of claim 11 wherein the set of instructions, when executed by the processor (102), further cause the processor to:
receive a user input, the user input providing a confirmation of whether the segment is an over-segmentation; and
remove the segment from the segmented image if the user input confirms the segment is an over-segmentation.

13. The system (100) of any one of the preceding claims wherein the set of instructions, when executed by the processor (102), cause the processor to repeatedly:
determine at least one geometric property of a segment of the segmented image of the branching anatomical structure;
determine whether the at least one geometric property of the segment is consistent with a shape of a branch in a branching anatomical structure; and
determine whether the segment is an over-segmentation based on whether the at least one geometric property of the segment is determined to be consistent with the shape of a branch in a branching anatomical structure;
for a plurality of segments in the segmented image of the branching anatomical structure.

14. A computer-implemented method (200) of determining over-segmentation in a segmented image of a branching anatomical structure, wherein the segmented image of the branching anatomical structure comprises a plurality of segments and the method comprises:
determining (202) at least one geometric property of a segment of the segmented image of the branching anatomical structure;
determining (204) whether the at least one geometric property of the segment is consistent with a shape of a branch in a branching anatomical structure; and
determining (206) whether the segment is an over-segmentation based on whether the at least one geometric property of the segment is determined to be consistent with the shape of a branch in a branching anatomical structure.

15. A computer program product comprising a computer readable medium, the computer readable medium having computer readable code embodied therein, the computer readable code being configured such that, on execution by a suitable computer or processor, the computer or processor is caused to perform the method as claimed in claim 14.
